Europäisches Patentamt

European Patent Office

Office européen des brevets

(11) Publication number: **0 137 986**
**A1**

# EUROPEAN PATENT APPLICATION

(21) Application number: 84110115.7

(22) Date of filing: 24.08.84

(51) Int. Cl.⁴: **C 08 J 5/10, B 32 B 25/02**

(30) Priority: 19.09.83 US 533123

(43) Date of publication of application: 24.04.85
Bulletin 85/17

(84) Designated Contracting States: BE DE FR GB IT LU

(71) Applicant: THE FIRESTONE TIRE & RUBBER
COMPANY, 1200 Firestone Parkway, Akron,
Ohio 44317 (US)

(72) Inventor: Kern, William J., 2785 Greenridge Road, Norton
Ohio 44203 (US)
Inventor: Tzeng, Wen-Shian V., 54 Eastway, Reading
Massachusetts 01867 (US)

(74) Representative: Kraus, Walter, Dr. et al, Patentanwälte
Kraus, Weisert & Partner Irmgardstrasse 15,
D-8000 München 71 (DE)

(54) **Method for improving rubber-to-metal adhesion and adhesion retention.**

(57) A method for improving metal adhesion and metal adhesion retention properties between a vulcanizable rubber composition and brass or brass-plated metallic reinforcing elements includes the steps of applying an adhesion promoting additive to the surface of the vulcanizable rubber composition or the brass or brass-plated metallic reinforcing elements or both, contacting the vulcanizable rubber with the brass or brass-plated metallic reinforcing elements with the adhesion promoting additive therebetween and thereafter curing the rubber. Metal-reinforced rubber plies used as an element in manufactured rubber articles such as tires, conveyor belts and the like as well as other articles of manufacture, can be prepared according to the method of this invention.

0137986

## METHOD FOR IMPROVING RUBBER-TO-METAL
## ADHESION AND ADHESION RETENTION

### TECHNICAL FIELD

The present invention is directed toward improving the adhesion and adhesion retention between a rubber composition, used in the manufacture of tires, conveyor belts, hoses and the like, and metallic reinforcement cord, such as steel wire and cable which commonly carries a protective coating of zinc or brass, which is embedded in the stock. Flat sheets or strips of such stocks, reinforced with metal or fibers, are utilized as plies or other components of the articles and are referred to in the art as rubber skim stocks. Skim refers to a relatively thin layer or coating of the rubber over the reinforcement filaments or cords. Greater thicknesses of rubber are also bonded to metal in other instances such as motor mounts and these would not be termed skim stocks.

In the manufacture of the foregoing rubber articles, particularly steel-belted bias and radial tires, it has become common to reinforce the rubber skim stock material with steel wire or cable. One of the more important uses for a metallic reinforced rubber is as a belt where one or more of these belts are oriented beneath the tread stock to maintain the integrity and shape of the tire during inflation and subsequent load. Other areas where metal reinforced rubber skim stock may be utilized are in the body ply, bead or chafer of the tire.

In order for these components to function effectively, it is imperative that adhesion between the rubber and the steel cord be effectively maintained. Because steel is prone to oxidation, which even in minor degree is highly deleterious to the necessary adhesion with the rubber skim stock, and it would be most impractical to incorporate a chemically clean, oxidation-free steel cord in the belt at the time of its manufacture, the steel cord is plated with zinc or brass thereby protecting it from oxidation until it can be used.

While adhesion between zinc or brass-plated steel cord and rubber is generally far greater than that between the latter and oxidized steel, existing data determined from article life as well as modern testing techniques has indicated that adhesion obtained between plated steel cord and the elastomer must be increased for improved article life and service.

## BACKGROUND ART

In order to promote adhesion between rubber and ferrous metals it is known to employ a variety of metallic salts or other additives as an ingredient in a rubber composition. It is also known to employ various adhesive materials or compositions as a coating for the metal or the rubber or both prior to their being joined together and vulcanized. Inasmuch as the present invention does not employ metallic salts and the like as additives to the rubber composition, patents directed thereto are not relevant to the subject application apart from the fact that the components they teach improve the adhesion between rubber and metal.

With respect to the use of adhesive coatings and the like, the general teaching in the art includes the following patents.

U.S. Pat. No. 1,919,718 provides for the application of a thin uniform layer of an organic metal salt or soap as a coating to a metal surface which is subsequently embedded between layers of vulcanizable rubber. Alternatively, the metal salt or soap can be dissolved in a solvent or in a rubber cement.

U.S. Pat. No. 2,240,805 discloses a process for electrolytically plating iron with cobalt. The vulcanizable rubber subsequently applied adheres substantially better.

U.S. Pat. No. 2,581,920, owned by the Assignee of record herein, discloses an adhesive composition including a solvent, a dichlorobutadiene resin and chlorinated rubber for adhering natural as well as various synthetic rubbers to metallic substrates. The adhesive functions as a cement between the two materials and is used to coat one or both of the layers.

U.S. Pat. No. 3,936,536 discloses adhering rubber to metal by first coating the metal with an amine of cobalt chloride. The cobalt compound is first incorporated into a rubber which is then used as an adhesive; the rubber being the same or different from the rubber in the product.

U.S. Pats. No. 3,933,847 and 3,998,992 provide adhesive compositions for coating metal which is subsequently bonded to vulcanizable rubber. The adhesive formulation of Pat. No. 3,933,847 comprises a conjugated diene, heterocyclic nitrogen base interpolymer and silica. Pat. No. 3,998,992 discloses a similar formulation additionally containing a copolymerizable monomer. Both patents recite that "the adhesive is coated on the ferrous surface by any of the usual methods such as dipping, brushing, spraying etc and then dried briefly at room temperature or by the application of heat to remove solvents and/or water. The compounded rubber stock is then contacted with the adhesive surface and the whole assembly vulcanized with heat and pressure to complete the bonding process."

We have also found that a useful method for improving rubber-to-metal adhesion and adhesion retention between vulcanizable rubber compositions and brass or brass-plated steel includes the step of coating an unvulcanized rubber and/or the metal with a cobalt, nickel or other transition metal complex or salt or other additive that has heretofore been added directly to the rubber composition. As will be explained hereinbelow, this method can effect a cost savings inasmuch as less of the adhesion promoting additive may be employed.

## DISCLOSURE OF INVENTION

In general, the method of the present invention is practiced by the steps of applying an adhesion promoting additive to the surface of the vulcanizable rubber composition or the brass or brass-plated metallic reinforcing elements or both, contacting the vulcanizable rubber with the brass or brass-plated metallic reinforcing elements with the adhesion promoting additive therebetween and thereafter curing the rubber. Metal-reinforced rubber plies, commonly used as an element in manufactured rubber articles such as tires, conveyor belts and the like, can be prepared according to the method of the present invention. Similarly, articles of manufacture comprising cured rubber stocks and brass metal or brass-plated metal can be manufactured according to the method of the present invention.

### PREFERRED MODE FOR CARRYING OUT THE INVENTION

To illustrate our invention, a typical example of a rubber composition with brass-plated metallic reinforcement embedded therein was chosen. In particular, the example used to demonstrate the invention was a rubber skim stock which is suitable for the preparation of rubber articles such as tires. Adhesion between this stock with brass-plated steel reinforcement subsequent to vulcanization was measured and has also been presented hereinbelow.

Improved rubber coverage and adhesion retention between vulcanizable rubber compositions and metallic reinforcement such as steel, plated with brass is obtained by employing the method of our invention. We have found this method to provide better adhesion between vulcanizable rubber stocks and metallic reinforcement embedded therein than comparable stocks which do not contain any coating, particularly when both metal reinforced stocks are subjected to comparative testing in oven aged and long term humidity chamber aged tests, the latter at 90% relative humidity and 35° C. In other tests, practice of the method of this invention has provided comparable adhesion values to instances where the adhesion promoting additive was employed as an ingredient of the rubber composition.

As stated hereinabove, practice of the present invention requires the coating of at least one layer of the vulcanizable rubber composition or of the metal surface or any combination thereof with a compound or mixture of materials normally employed in a vulcanizable rubber stock as an adhesion promoting additive. An advantage of the method disclosed herein, previously noted, is that less of the additive can be employed inasmuch as it need not be distributed throughout the entire volume of the vulcanizable rubber stock where only a fraction of that volume will actually be in contact with the metal or metal reinforcement. Another advantage is that while the amount of material is lowered, thereby effecting a cost savings, the concentration at the rubber to metal interface can readily be higher than when a given quantity of the additive is employed throughout the rubber. The amount employed can be determined by the compounder, depending upon factors such as the adhesion values desired, cost of the material and ancillary effects relating to the presence of the promoter ingredient.

The preferred adhesion promoting additive is an organometallic complex based on the elements boron and cobalt which are linked through oxygen. The complex is commercially available as Manobond C from Manchem, Inc. Manobond C-16, the liquid form, is viscous and has an intense blue color. It has a cobalt content of 16 percent $\pm$ 0.3; a specific gravity at 25° C of 1.10 $\pm$ 0.05 and a Brookfield viscosity at 25° C of 30-90 poise. Being in liquid form, it can be readily applicable to the surface of an uncured sheet of rubber or to the metal according to the method herein. Manobond CP-216 is a similar complex but is the solid variety, being an intense blue powder with cobalt content of 11.2 percent $\pm$ 0.3 and specific gravity by calculation of 1.32. Manobond-C is described in greater detail in U.S. Pats. No. 3,296,242 and 4,057,529, the subject matter of which is hereby incorporated by reference.

Practice of the subject invention is not limited to the selection of Manobond C as there are other adhesion promoting additives that can be employed as coatings. Many of these are inorganic and organic salts of transition metals, with cobalt and nickel being the preferred metals. Among the inorganic anions included are the chlorides, oxide-hydrates or hydroxides and nitrates. Useful organic salts are formed with aliphatic and aromatic mono and dicarboxylic acids having from one to about 20 carbon atoms and from two to about 22 carbon atoms, respectively. Suitable monocarboxylic acids would be preferably, formic, acetic, propionic, butyric, valeric, octanoic, undecanoic, lauric, palmitic, stearic, nonadecanoic, benzoic and the like. Suitable dicarboxylic acids include acids such as oxalic, malonic, maleic, succinic, glutaric, adipic, pimelic, suberic, azelaic, sebacic, phthalic, isophthalic, terephthalic, homophthalic, o,m and p-phenylenediacetic and o-phenyleneacetic-beta-propionic acid.

Combinations of transition metals with other materials such as depolymerized scrap rubber (DSR) have been found to improve adhesion by co-workers in the laboratory of the Assignee of record herein. More specifically, DSR and cobalt or nickel hydrate were employed.

Other materials that have been added to rubber stocks to improve rubber to metal adhesion include cobalt compounds such as cobalt chloride bis(8-hydroxyquinolate) and cobalt bis(8-hydroxyquinolate) and compounds selected from the group consisting of 3-amino-2-carboxy-4-chlorobenzophenone, 3-hydroxy-2-methyldiphenylamine and 5-amino-2-methyl-N-phenylbenzensulfonamide and mixtures thereof. Still others include trimethoxy silane compounds, preferably 3-(2-aminoethylamino) propyl trimethoxysilane and 3-mercaptopropyl trimethoxysilane. The foregoing list is meant to be illustrative only of the many known adhesion promoting additives but should not be construed as exhaustive or limiting.

These compounds are usually added in amounts of about one part and up to six or 10 parts per hundred parts of rubber (phr) when compounded into the bulk rubber stock. Thus, generally less than several parts and preferably less than one phr is all that is needed for coating according to the method of the present invention.

With the exception of Manobond C-16, many of the adhesion promoting additives are in solid form and should be solubilized to form a liquid to facilitate the coating step. Solvents would necessarily include a compound in which the additive is soluble and which is compatible with the vulcanizable rubber composition and not deleterious thereto. One such useful material is conventional rubber process oil which comprises naphthenic oils. Others would include various aromatic and paraffinic oils. In the instance of relatively viscous liquid materials, such as Manobond C-16, it may be desirable to mix these with process oil to improve their flow and coating characteristics. Thus, while Manobond C-16 can be employed undiluted, if desired, it may be diluted to any concentration down to about 10 percent by weight. A preferred dilution is 25 percent by weight in process oil.

The step of coating with liquid or solubilized additives can be facilitated in any known conventional manner for coating a solid with a liquid such as by spraying, brushing, doctor blade, dipping and the like. We prefer spraying or wiping the liquid via doctor blade to one or both surfaces of uncured rubber at the rollers just prior to the calendering operation wherein brass-plated metallic reinforcement is embedded between two layers of the rubber and pressed together. As an alternative or additional treatment, the brass-plated metallic reinforcement could be passed through a trough of the additive or over a pad saturated therewith, with the goal of providing the coating to one or more of the mating surfaces just prior to the calendering operation.

Notwithstanding the stated preference for employing liquids during the coating step, solid powders could be employed such as by dusting or lightly padding the tacky, unvulcanized rubber with the adhesion promoting ingredient or possibly coating the wire with a liquid such as oil and then passing it through the powder. These solids coating treatments may require greater amounts than when a dilute liquid treatment is employed but again, the step accomplishes the objective of concentrating the ingredient at the rubber/metal interface. Conceivably, such powder coating treatments could involve coating with a mixture of the desired ingredient and a non-adhesion promoting powder such as a filler material where a dilution is sought.

Regarding the vulcanizable rubber composition itself, natural rubber may be employed alone or in a blended state with one or more synthetic rubbers such as styrenebutadiene, synthetic isoprene or other synthetic rubbers with a natural rubber content of at least 40 to 50 percent. Further, pure forms of synthetic rubbers such as those disclosed may be used either alone or blended with other synthetic rubbers. As is known to those skilled in the art, other rubber chemical ingredients, i.e., carbon black, mineral fillers, zinc oxide, stearic acid, process oil, etc., are usually compounded to form a Banbury mixed rubber masterbatch. The remaining conventional compounding ingredients including curatives (sulfur and accelerators), cure retarder and the like are subsequently added to the rubber masterbatch by mill mixing. Generally, any conventional vulcanizable rubber stock can be bonded with improved adhesion to brass metal or brass-plated metallic reinforcement by practice of the method of the present invention.

In order to determine the improvement in adhesion and adhesion retention obtained by practice of the method of the present invention, T-adhesion tests (rubber-to-steel cord) were conducted according to the procedure which follows.

The test utilized T-adhesion pads prepared by placing 60 gauge sheets of uncured fully compounded rubber skim stock on 51 gauge fabric reinforced rubber backing. Commercial brass-coated wires (7/2+1) were placed between two pads of the reinforced rubber skim stock with the wires in contact with the uncured rubber skim at 1.25 cm intervals. The width of each adhesion pad was 1.25 cm. The pads were placed in a preheated curing mold and were cured for 30 minutes at 149° C. Rubber-steel cord adhesion testing was done on a Model 1130 Instron Universal Tester at a crosshead speed of 25.4 cm per minute and 110° C.

The T-adhesion pads were preheated in the 110° C oven for 20 minutes prior to testing. Oven aging of the cured T-adhesion pads was done in a forced air oven at 121° C for two days. Long term humidity chamber aging of the cured T-adhesion pads was done at 90 percent relative humidity at 35° C.

### Detailed T-adhesion Test Procedure

1. Using a Clicker machine and a 15.24 x 1.25 cm die, prepare an adequate number of calendered and control stock samples for T-adhesion pad building.

2. Use one piece of calendered fabric reinforced rubber backing (0.1295 cm).

3. Ply one piece of 60 gauge control rubber skim stock (0.1524 cm) onto the fabric backing.

4. Place sample in building jig with fabric side down.

5. Place ten cords (of brass coated wire) approximately 17.78 cm in length equally spaced on top of the two piece assembly.

6. Invert another 2 ply assembly, made as in items 1, 2 and 3, on top of cords so that cords are between the 2 layers of rubber skim stock to be tested.

7. This assembly should now fit snugly into the cavity of the curing mold.

8. Adhesion pads shall be cured for 30 minutes at 149° C and then allowed to equilibrate for 24 hours before testing.

9. Testing Machine: Model 1130 Instron Universal Tester.

10. Test speed 25.4 cm/minute; testing temperature, 110° C after 20 minutes preheat.

11. The top grip shall be of a special holder made for the cured sample, with a slot in the bottom to permit the sample to be inserted with the wires protruding. The bottom grip should be a wedge type, designed to exert increasing tightening as each wire is pulled from the cured sample.

12. Record 10 wire pull-outs and average. Multiply average pull-out force value by 0.3572 to obtain kilograms per centimeter.

For the tests which follow, a rubber skim stock, composition A, was prepared without any Manobond C-16. As a control, compositions B and C were prepared containing 2.0 phr and 1.5 phr of Manobond C-16, respectively. Compositions A, B and C were each used to form the test pads previously described and were tested hereinbelow as Examples 1, 2 and 3. Examples 4-6 were conducted with composition A and differed as follows: Example 4 was prepared by dipping the brass coating metallic wires into Manobond C-16; Example 5 was prepared by coating one of the two slabs of rubber with a Manobond C-16 solution, and Example 6 was prepared by coating both of the two slabs of rubber with a Manobond C-16 solution. The latter solution was prepared by mixing one part of Manobond C-16 with three parts of naphthenic process oil.

Formulation of composition A was as follows with all parts given on the basis of parts per hundred parts of rubber (phr).

| Compounding Ingredients | Composition A |
|---|---|
| Natural Rubber (E grade) | 100 |
| HAF Black | 60 |
| Zinc Oxide | 7.5 |
| Stearic Acid | 0.50 |
| Hydrocarbon resins | 2.0 |
| Santoflex DD[1] | 2.0 |
| Shell Dutrex 726[2] | 2.0 |
| NOBS Special accelerator[3] | 0.80 |
| Santoflex 13[4] | 1.0 |
| Sulfur MB[5] | 7.50 |
| Santogard PVI[6] | 0.40 |

1) 6-dodecyl-1,2-dihydro-2,2,4-trimethylquinoline

2) a known process oil of medium solvency containing a 35% minimum of naphthene ring carbons

3) N-oxydiethylene benzothiazole-2-sulfenamide (NOBS Special accelerator)

4) N-(1,3-dimethylbutyl)-N'-phenyl-p-phenylene-diamine

5) 80/20 sulfur/extender oil preblend, with a naphthenic oil in the range of 18-22% oil. The sulfur is a yellow powder, 89.5 min. of which is insoluble sulfur.

6) N-(cyclohexylthio)phthalimide

It is to be understood that the foregoing composition of the rubber skim stock has been presented solely to show those skilled in the art at least one rubber skim stock in detail with which to practice the invention. As such, the present invention is not to be limited only to this specific formulation.

Six sets of tests were conducted on each of the five examples for comparison. Table I shows the results of the testing under normal and oven aged conditions. Long term humidity chamber aging tests are reported in Table II. The force necessary to pull or remove the metallic reinforcement from the vulcanized rubber skim stock is given first, in kg/cm, followed by the percent of rubber skim stock remaining on the surface of the metallic reinforcement. The amount of rubber skim stock remaining on the metallic reinforcement was determined by visual examination and has been reported as % rubber coverage. Brass plated steel metallic reinforcement was utilized in all of the tests.

Actual amounts of Manobond C-16 employed for each of the Examples appears at the top of Tables I and II. It is to be understood that Examples 4-6 did not contain Manobond C-16, however, the amount used to form the coating of the wire and rubber slabs is reported in terms of phr.

Normal and unaged testing, Test A, is merely a measurement of the initial adhesive properties between the rubber composition and the metallic reinforcement. The oven aging test, Test B, is an accelerated heat aging test and is significant in determining the effect of heat on the thermal stability of the chemical bonds formed between the rubber composition and the metallic reinforcement during vulcanization.

TABLE I

## Short Term Aged Wire Adhesion Tests

| Example | 1 | 2 | 4 | 5 | 6 |
|---|---|---|---|---|---|
| Manobond C-16, phr | 0 | 2.0 | <2.4 | 0.5 | 0.7 |
| **Test A** | | | | | |
| Normal (Unaged)[a] | | | | | |
| Brass-plated cord | | | | | |
| Kg/cm | 25.02 | 29.66 | 34.13 | 24.12 | 24.12 |
| % rubber coverage | 80 | 100 | 80 | 90 | 90 |
| **Test B** | | | | | |
| Oven Aged[b] | | | | | |
| Brass-plated cord | | | | | |
| Kg/cm | 11.79 | 14.83 | 24.11 | 16.26 | 18.05 |
| % rubber coverage | 80 | 100 | 90 | 100 | 100 |

a) T-adhesion pads cured 30 minutes at 149° C and tested at 110° C

b) T-adhesion pads cured 30 minutes at 149° C, heat aged in forced air oven for 2 days at 121° C and tested at 110° C

As can be determined from Table I, adhesion of composition B (Example 2) to brass-plated steel cord was improved over composition A (Example 1) in the normal unaged and oven aged tests, which is to be expected. Examples 4-6 provided adhesion values that were satisfactory and in several instances improved over Example 2. Percent rubber coverage was usually 90 to 100 with only one 80 percent value reported. Highest values were reported for Example 4 wherein the brass-coated wire was coated with Manobond C-16.

The percent rubber coverage measurement is deemed to be significant in that it visually represents the increased adhesion of the rubber composition to the plated steel cord. As is well known to those skilled in the art, the amount of rubber left adhering to the steel cord after it has been pulled from a cured T-adhesion pad represents the relationship of the adhesive force attaching the rubber composition to the surface of the steel cord and the tear strength of the rubber composition itself. Large percentages of rubber coverage indicate that the adhesion to the steel cord exceeds the internal strength of the rubber composition itself, i.e., tear strength. Therefore, when the rubber coverage is very high it can be concluded that the metal to rubber adhesion is greater than the force measured to pull the steel cord out of the rubber pad since the force measured was a result of the rubber composition rupturing and not the chemical bonds present at the metal to rubber interface.

## TABLE II
### Long Term Humidity Chamber Aged Tests

| Example | 1 | 3 | 4 | 5 | 6 |
|---|---|---|---|---|---|
| Manobond C-16, phr | 0 | 1.5 | <2.4 | 0.5 | 0.7 |
| **Test C** | | | | | |
| 33 Days | | | | | |
| Brass-plated cord | | | | | |
| Kg/cm | 21.62 | 26.63 | 26.61 | 22.16 | 25.59 |
| % rubber coverage | 70 | 90 | 90 | 80 | 80 |
| **Test D** | | | | | |
| 63 Days | | | | | |
| Brass-plated cord | | | | | |
| Kg/cm | 19.12 | 22.52 | 22.50 | 19.48 | 19.66 |
| % rubber coverage | 60 | 90 | 90 | 70 | 70 |
| **Test E** | | | | | |
| 96 Days | | | | | |
| Brass-plated cord | | | | | |
| Kg/cm | 16.98 | 20.01 | 20.00 | 18.76 | 20.37 |
| % rubber coverage | 50 | 80 | 80 | 70 | 70 |
| **Test F** | | | | | |
| 137 Days | | | | | |
| Brass-plated cord | | | | | |
| Kg/cm | 20.01 | 25.02 | 25.00 | 23.23 | 25.20 |
| % rubber coverage | 50 | 80 | 80 | 70 | 80 |

-15-

In Table II, the control, Example 3, again out-performed Example 1. Examples 4-6 provided comparable adhesion values to composition C, Example 3, throughout Tests C-F. Best results were reported for Example 6 wherein two sides of the rubber were coated.

Based on the foregoing results reported in Tables I and II, we consider the method whereby the metal or the rubber or both surfaces are coated with an adhesion promoting ingredient to be effective in promoting adhesion between the rubber stock and brass or brass-plated metallic reinforcement without the separate addition of transition metal salts, complexes or additives to the rubber stock. As stated hereinabove, the rubber can be natural or synthetic or a blend and formulated as a rubber stock or a skim stock. Also, the wire coating in the practice of our invention can be in the form of a strand, mat, web, ply or braid.

The present invention also finds utility in, for example, brassed metal-rubber articles such as motor mounts, cutless bearings, torsilastic springs, power belts, printing rolls, metal wire reinforced or braided hose, electrical deicers, shoe heels and wherever it is desired to secure rubber to metal or provide a flexible and strong, thermally stable bond between the same.

In conclusion, it is to be understood that all variations of the method and rubber compound disclosed herein fall within the scope of the claimed invention and that the subject invention is not to be limited by the examples set forth herein. As will be apparent to those skilled in the art, practice of the method of this invention can be varied within the scope of our total specification disclosure by selection of various adhesion promoting additives as well as the step of coating therewith, e.g., spraying, dipping, brushing, doctor blade and the like, and it is believed that practice of the present invention can be determined without departing from the spirit of the invention herein disclosed and described, the scope of the invention being limited solely by the scope of the attached claims.

## CLAIMS

1. A method for improving metal adhesion and metal adhesion retention properties between a vulcanizable rubber composition and brass or brass-plated metallic reinforcing elements comprising the steps of:
applying an adhesion promoting additive to the surface of at least one of said vulcanizable rubber composition or said brass or brass-plated metallic reinforcing elements;
contacting said vulcanizable rubber with said brass or brass-plated metallic reinforcing elements with said adhesion promoting additive therebetween; and
thereafter curing said rubber.

2. A method as set forth in claim 1, wherein said adhesion promoting additive is a liquid.

3. A method as set forth in claim 2, wherein said step of applying comprises spraying said liquid adhesion promoting additive onto said vulcanizable rubber.

4. A method as set forth in claim 3, wherein said adhesion promoting additive comprises an organic complex containing cobalt, boron and oxygen.

5. A method as set forth in claim 1, wherein said step of applying comprises dipping said brass-plated metallic reinforcement elements into said liquid adhesion promoting additive.

6. A method as set forth in claim 5, wherein said adhesion promoting additive comprises an organic complex containing cobalt, boron and oxygen.

7. A method as set forth in claim 1, wherein said adhesion promoting additive is a powder.

8. A method as set forth in claim 1, wherein said rubber in said vulcanizable rubber composition comprises natural rubber, synthetic rubber and blends thereof.

9. A metal-reinforced rubber ply, to be used as an element in a manufactured rubber article, prepared according to the method of claim 1.

10. A rubber article containing at least one rubber ply according to claim 9.

11. An article of manufacture comprising a cured rubber stock and brass metal or brass-plated metal manufactured according to the method of claim 1.

| | DOCUMENTS CONSIDERED TO BE RELEVANT | | EP 84110115.7 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X,D | US - A - 1 919 718 (H. GRAY)  <br> * Totality, especially column 1, lines 11-44; column 2, lines 53-55; example 4 * | 1-3,8-11 | C 08 J  5/10 <br> B 32 B 25/02 |
| Y | US - A - 2 643 273 (CH. WILKINS)  <br> * Column 1, lines 11-21; column 3, lines 14-21 * | 1,2,5, 8-11 | |
| Y | GB - A - 993 045 (DUNLOP RUBBER COMPANY LIMITED)  <br> * Page 1, lines 42-49; examples 5-7; claims 1,2,4,6,7,9 * | 1,8-11 | |
| Y | DE - C - 900 270 (FARBENFABRIKEN BAYER AKTIENGESELLSCHAFT)  <br> * Totality, especially claim  * | 1,2,8-11 | **TECHNICAL FIELDS SEARCHED (Int. Cl.4)** |
| D,A | US - A - 4 057 529 (TH. LEO et al.)  <br> * Claims 1,3,5,9,13,15,17,19, 23; examples * | 1,4,6 | C 08 J <br> B 32 B 25/00 <br> B 29 H <br> C 08 L 21/00 <br> B 60 C |

The present search report has been drawn up for all claims

| Place of search | Date of completion of the search | Examiner |
|---|---|---|
| VIENNA | 29-11-1984 | KALTENEGGER |